# EUROPEAN PATENT APPLICATION

(11) **EP 1 975 932 A1**
(43) Date of publication of application: **01.10.2008**
(21) Application number: 08005484.4
(22) Date of filing: 25.03.2008
(51) Int. Cl.: G11B 7/135, G11B 7/00, G11B 7/125

(54) **Optical pickup**

(30) Priority: 26.03.2007 JP 2007078967
(71) Applicant: Funai Electric Co., Ltd., Daito-shi, Osaka 574-0013 (JP)
(72) Inventor: Kamioka, Yuichi, Daito-shi, Osaka 574-0013 (JP); Takahashi, Kazuhiro, Daito-shi, Osaka 574-0013 (JP); Nagashima, Kenji, Daito-shi, Osaka 574-0013 (JP); Tanabe, Noritaka, Daito-shi, Osaka 574-0013 (JP); Ito, Tatsuya, Daito-shi, Osaka 574-0013 (JP)
(74) Representative: Grünecker, Kinkeldey, Stockmair & Schwanhäusser Anwaltssozietät

(57) **Abstract**

An objective lens (11) corresponding to a BD beam light, and an objective lens (12) corresponding to a DVD/CD beam light are arranged parallel to an optical disc. One rising mirror (15) is arranged in a tilted manner on a side opposite to the optical disc of the objective lenses (11, 12). A first film (F1) for reflecting the BD beam light emitted from a laser diode (1) and making the beam light enter the objective lens (11) and transmitting the DVD/CD beam light emitted from a laser diode (2) is arranged on one of the parallel surfaces of a transparent substrate (15b) of the rising mirror (15). A second film (F2) for reflecting the DVD/CD beam light transmitted through the first film (F1) and the transparent substrate (15b) and making the beam light enter the objective lens (12) is arranged on the other surface. An incident optical axis to each objective lens (11, 12) of the BD beam light and the DVD/CD beam light is branched with the rising mirror (15).

## Description

### BACKGROUND OF THE INVENTION

### 1. Field of the Invention

The present invention relates to a structure of an optical system in an optical pickup of two-lens type.

### 2. Description of the Related Art

An optical pickup of two-lens type has been proposed in which two kinds of objective lenses are arranged to ensure compatibility of different types of optical discs such as BD (Blu-ray disc; registered trademark), DVD (Digital Versatile Disc), and CD (Compact Disc). The optical pickup of two-lens type emits a beam light corresponding to the type of optical disc from a light source, collects the beam light on an optical disc with one of the objective lenses, and performs reproduction and recordation of information with respect to the optical disc.

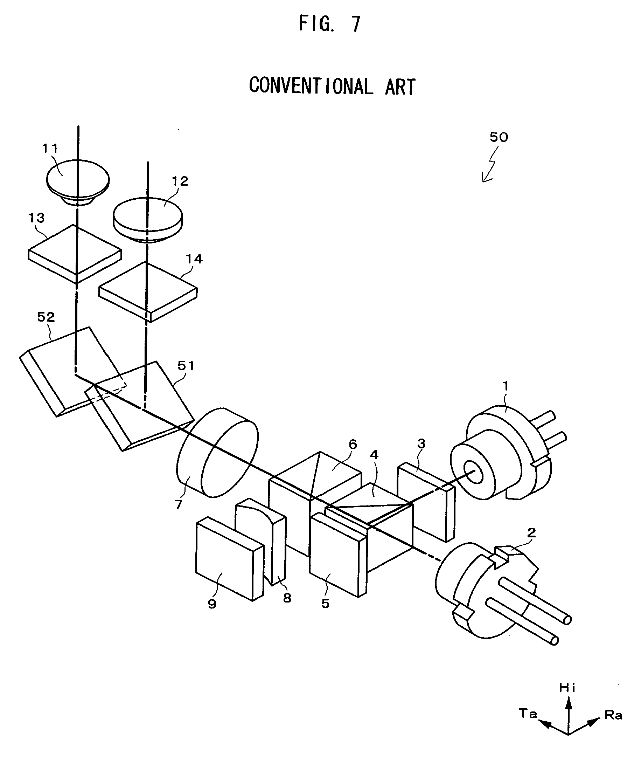

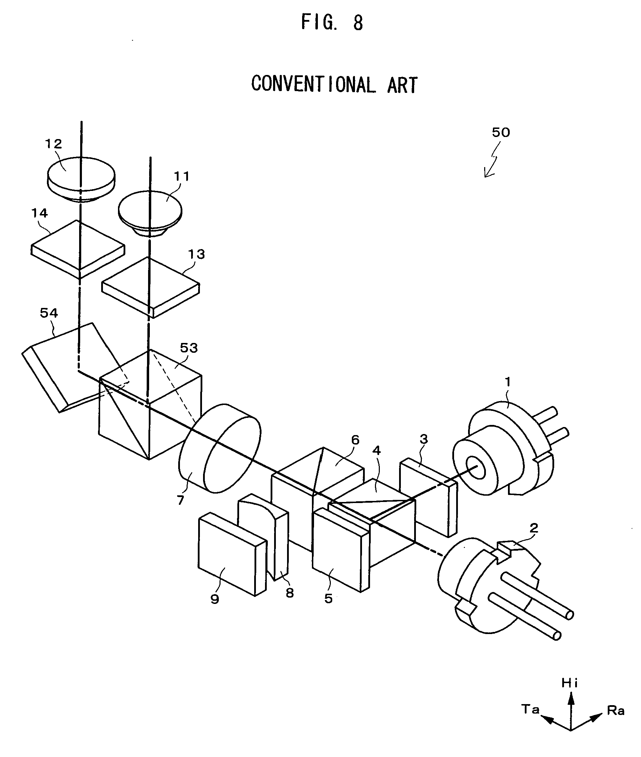

Figs. 7 and 8 are views showing an optical system of an optical pickup 50 of two-lens type in the conventional art. The same reference numerals are denoted for the same or corresponding portions in the figure. The optical disc (not shown) such as BD, DVD, or CD is installed above the objective lenses 11, 12. A BD objective lens 11 is designed to be adapted to BD and a BD beam light (blue light having wavelength of 405nm) corresponding to the BD. The BD objective lens 11 collects the BD beam light on the BD. A DVD/CD objective lens 12 is designed to be adapted to at least one of DVD and a DVD beam light (red light having wavelength of 650nm) corresponding to the DVD, or CD and a CD beam light (near-infrared light having wavelength of 780nm) corresponding to the CD. The DVD/CD objective lens 12 collects the DVD beam light or the CD beam light on the DVD or the CD. A BD laser diode 1 is a light source for emitting the BD beam light. A DVD/CD laser diode 2 is a light source for emitting the DVD beam light and the CD beam light. A control unit (not shown) arranged in the optical pickup 50 makes the laser diodes 1, 2 emit the beam light according to the type of the installed optical disc.

The BD beam light emitted from the BD laser diode 1 is transmitted through a BD diffraction grating 3 as shown with a chain dashed line and entered to a dichroic prism 4, and thereafter, entered to a polarization beam splitter 6 with the light path bent by the dichroic prism 4. In this process, scattered light of the BD beam light is received by a forward scattered light detector 5. The control unit of the optical pickup 50 controls drive of the BD laser diode 1 based on a light quantity signal output from the forward scattered light detector 5, and maintains the power of the emitting BD beam light constant. The DVD/CD beam light (DVD beam light or CD beam light) emitted from the DVD/CD laser diode 2 is transmitted through the dichroic prism 4 as shown with a chain double-dashed line, and entered to the polarization beam splitter 6. The paths of the BD beam light and the DVD/CD beam light substantially coincide at the dichroic prism 4. The BD/DVD/CD beam light (BD beam light, DVD beam light, or CD beam light) is transmitted through the polarization beam splitter 6 and a collimator lens 7. The collimator lens 7, which is movable in a tangential direction Ta of the optical disc, appropriately converts the beam light to parallel light, and appropriately corrects spherical aberration of the beam light.

In Fig. 7, the DVD/CD beam light out of the BD/DVD/CD beam light transmitted through the collimator lens 7 is reflected by a dichroic mirror 51 to have the light path bent, and then transmitted through a DVD/CD 1/4 wavelength plate 14, entered to the DVD/CD objective lens 12, and collected on the DVD or the CD, as shown with a chain double-dashed line. The BD beam light is transmitted through the dichroic mirror 51 and reflected by a mirror 52 to have the light path bent, and then transmitted through a BD 1/4 wavelength plate 13, entered to the BD objective lens 11, and collected on the BD, as shown with a chain dashed line. In Fig. 8, the BD beam light out of the BD/DVD/CD beam light transmitted through the collimator lens 7 is reflected by a dichroic prism 53 to have the light path bent as shown with a chain dashed line, transmitted through the BD 1/4 wavelength plate 13, entered to the BD objective lens 11, and collected on the BD. The DVD/CD beam light is transmitted through the dichroic prism 53, reflected by a mirror 54 to have the light path bent, transmitted through the DVD/CD 1/4 wavelength plate 14, entered to the DVD/CD objective lens 12, and collected on the DVD or the CD, as shown with a chain double-dashed line.

The reflected light at the optical disc of the BD/DVD/CD beam light enters the polarization beam splitter 6 through each optical component in the order opposite the above. The reflected light has the light path bent by the polarization beam splitter 6, is transmitted through a cylindrical lens 8, and received by a photodetector 9. The photodetector 9 converts the received reflected light to an electric signal, and detects a focus error signal, a tracking error signal, a reproduction signal, and other signals related to aberration and light quantity. The control unit of the optical pickup 50 performs reproduction or recordation of information with respect to each optical disc while performing servo of focus or tracking based on each signal output from the photodetector 9.

In the conventional optical pickup 50 described above, a plurality of mirrors 51, 52, 54 and prism 53 are used to make each beam light enter the corresponding objective lens 11, 12, and thus there are a great number of components and the cost is high. Furthermore, the relative angle and the relative position of attachment of the mirrors 51, 52 or the prism 53 and the mirror 54 must be adjusted to enhance the relative accuracy of the tilt of an optical axis of each beam light entering each objective lens 11, 12, and thus assembly is difficult. Moreover, the mirrors 51, 52 or the prism 53 and the mirror 54 are arranged at an interval of a certain extent so that the beam light reflected by the mirrors 52, 54 is not interrupted by the mirror 51 or the prism 53, and thus the objective lenses 11, 12 also need to be arranged at an interval of a certain extent, whereby the optical pickup becomes large.

Japanese Laid-Open Patent Publication No. 2006-260743 discloses an optical pickup equipped with one objective lens for collecting the BD/DVD/CD beam light on the BD, DVD, or CD respectively, where a rising mirror including one dichroic mirror is arranged on a side opposite to optical disc of the objective lens, a first reflection surface for reflecting the BD/DVD beam light (BD beam light or DVD beam light) to be entered to the objective lens and transmitting the CD beam light is arranged on one surface of the rising mirror, and a second reflection surface for reflecting the CD beam light and converting it to divergent light to be entered to the objective lens is arranged on the other surface. Japanese Patent Publication No. 2004-62953 discloses an optical pickup equipped with one objective lens for collecting the BD/DVD beam light on the BD or DVD respectively, where one rising mirror is arranged on a side opposite to optical disc of the objective lens, a dichroic mirror for reflecting the BD beam light to be entered to the objective lens and transmitting the DVD beam light is arranged on one surface of the rising mirror, and a hologram mirror or a non-spherical mirror for reflecting the DVD beam light to be entered to the objective lens while correcting the aberration produced at the objective lens is arranged on the other surface. Japanese Laid-Open Patent Publication No. 2003-272219 discloses an optical pickup equipped with one objective lens for collecting the DVD/CD beam light on the DVD or CD respectively, where one rising mirror of trapezoid shape is arranged on a side opposite to optical disc of the objective lens, the DVD/CD beam light is reflected at one surface facing the objective lens of the rising mirror to be entered to the objective lens.

In the optical pickup of one-lens type as shown in Japanese Laid-Open Patent Publication No. 2006-260743 and Japanese Laid-Open Patent Publication No. 2004-62953, the incident optical axes to the objective lens of the BD/DVD/CD beam lights are coincided with the rising mirror. However, the exit optical axis from both reflection surfaces normally shifts according to the interval between the reflection surfaces of the rising mirror, and thus designing and manufacturing of the rising mirror become difficult if attempting to eliminate such shift, and the cost increase. The objective lens is generally designed on the basis of the BD beam light having short wavelength, and thus the aberration produced in the DVD/CD beam light having long wavelength becomes very large. Therefore, an aberration correction function or a divergent light conversion function needs to be provided to the surface for reflecting the DVD/CD beam light of the objective lens and the rising mirror, whereby the cost of the objective lens and the rising mirror increases. Moreover, since the objective lens is movable by an actuator, it is difficult and not realistic to correct the large aberration produced in the DVD/CD beam light with one objective lens. In the optical pickup of one-lens type as shown in Japanese Laid-Open Patent Publication No. 2003-272219, the aberration produced in the CD beam light having long wavelength is small even if the objective lens is designed on the basis of the DVD beam light having short wavelength, and thus the aberration correction function etc. does not need to be provided to the objective lens nor the rising mirror. Therefore, it is advantageous to be equipped with an objective lens designed on the basis of the BD beam light and an objective lens designed on the basis of the DVD/CD beam light in order to suppress the cost low while suppressing aberration low in each of BD/DVD/CD beam light.

### SUMMARY OF THE INVENTION

In view of solving the above problems, the present invention aims to lower the cost, achieve miniaturization and enhance assembly performance in the optical pickup of two-lens type.

The present invention provides an optical pickup including a light source for emitting beam lights having different wavelengths corresponding to types of optical discs; a first objective lens for collecting the beam light corresponding to one optical disc on the corresponding optical disc, and a second objective lens for collecting the beam light corresponding to another optical disc on the corresponding optical disc, wherein each objective lens is arranged parallel to the optical disc; one rising mirror is arranged in a tilted manner on a side opposite to the optical disc of each objective lens; and the rising mirror has a first film for reflecting one beam light emitted from the light source and making the beam light enter one objective lens and transmitting the other beam light on one of the parallel surfaces of a transparent substrate, and a second film for reflecting the other beam light emitted from the light source and transmitted through the first film and the transparent substrate and making the beam light enter the other objective lens on the other surface, an incident optical axis to the one objective lens of the one beam light and an incident optical axis to the other objective lens of the other beam light being branched.

In this manner, one rising mirror is used to make each beam light having different wavelengths enter the corresponding first or second objective lens, whereby the number of components is small and lower cost is achieved. The lowering in cost is further achieved since the manufacturing cost of the rising mirror is lower than that of the prism. Furthermore, since the incident optical axes to each objective lens of each beam light are not forcibly coincided but are branched with one rising mirror, the designing and manufacturing of the rising mirror and the first and second films are facilitated, and lower cost is further achieved. Two objective lenses corresponding to each beam light are used, and the aberration correction function and the divergent light conversion function do not need to be added to the first and second films of the rising mirror, and thus the designing and the manufacturing of the first and second films are facilitated, thereby lower cost is further achieved. As other mirrors and prisms which interrupt each beam light reflected with the first and second films of the rising mirror are not arranged, the interval between the incident optical axes of the beam lights to the objective lenses from the rising mirror can be narrowed, the interval between the objective lenses can be narrowed, and the optical pickup can be miniaturized. In particular, the interval between the incident optical axes and the objective lenses can be further narrowed and the optical pickup can be further miniaturized by increasing an attachment angle (steep slope) of the rising mirror with respect to the objective lens. Moreover, since the first and second films for reflecting each beam light are respectively arranged on the parallel surfaces of one rising mirror, the relative angle and the relative position of the first and second films always become constant, and each beam light can be entered to each objective lens by simply adjusting the attachment position and the angle of the rising mirror, whereby the relative accuracy of the slope of the incident optical axis become high and the assembly performance enhances.

According to one embodiment of the present invention, a portion not necessary for reflection and transmission of the beam light on the side opposite to each objective lens of the rising mirror is cut. Thus, the height of the rising mirror is made low and miniaturization in the height direction of the optical pickup can be achieved while reflecting each beam light with the rising mirror and making the beam light enter each corresponding objective lens.

According to one embodiment of the present invention, the first objective lens is arranged on a center line of the optical pickup and the optical disc to collect the beam light having short wavelength on the optical disc corresponding to the beam light; the second objective lens is arranged on a side opposite to the light source of the first objective lens to collect the beam light having long wavelength on the optical disc corresponding to the beam light; and the rising mirror reflects the beam light having short wavelength of the beam lights emitted from the light source with the first film and makes the beam light enter the first objective lens, and transmits the beam light having long wavelength through the first film and the transparent substrate and reflects the beam light with the second film to make it enter the second objective lens. Thus, the first objective lens is arranged on the center line of the optical pickup and the optical disc, whereby the tracking error signal can be accurately detected with the three beam method, and the reproduction performance can be enhanced when reproducing the corresponding optical disc by using the beam light having short wavelength and the first objective lens. Furthermore, since the first film of the rising mirror reflects the beam light having short wavelength and transmits the beam light having long wavelength, the designing and the manufacturing of the first film are easier than the opposite case (first film reflects the beam light having long wavelength and transmits the beam light having short wavelength), and lower cost is achieved. Moreover, the second film of the rising mirror merely reflects the beam light having long wavelength, and thus the designing and the manufacturing are easy, the manufacturing cost is low, and lower cost is achieved.

According to one embodiment of the present invention, the first objective lens is arranged on a center line of the optical pickup and the optical disc to collect the beam light having short wavelength on the optical disc corresponding to the beam light; the second objective lens is arranged on the light source side of the first objective lens to collect the beam light having long wavelength on the optical disc corresponding to the beam light; and the rising mirror reflects the beam light having long wavelength of the beam lights emitted from the light source with the first film and makes the beam light enter the second objective lens, and transmits the beam light having short wavelength through the first film and the transparent substrate and reflects the beam light with the second film to make it enter the first objective lens. Thus, the tracking error signal can be accurately detected with the three beam method, and the reproduction performance can be enhanced when reproducing the corresponding optical disc by using the beam light having short wavelength and the first objective lens. Furthermore, since the second objective lens and the first film are arranged on the light source side in comparison with the first objective lens and the second film, the distance from the light source to the objective lens and the rising mirror can be shortened to further miniaturize the optical pickup. Moreover, since the second film of the rising mirror merely reflects the beam light having short wavelength, the designing and the manufacturing are easy, the manufacturing cost is low, and lower cost is achieved.

According to a typical embodiment of the present invention, a light source emits a first beam light corresponding to BD, a second beam light corresponding to DVD, and a third beam light corresponding to CD. A first objective lens collects the first beam light on the BD and is arranged on the center line of the optical pickup and the optical disc. A second objective lens collects the second or the third beam light on the DVD or the CD and is arranged so as to line parallel to the first objective lens and the optical disc on a side opposite to the light source of the first objective lens. A rising mirror includes one dichroic mirror made of glass, and has a first film for reflecting the first beam light emitted from the light source and making the first beam light enter the first objective lens and transmitting the second or the third beam light on one of the parallel surfaces of a transparent substrate, and a second film for reflecting the second or the third beam light emitted from the light source and transmitted through the first film and the transparent substrate and making the beam light enter the second objective lens on the other surface, where an incident optical axis to the first objective lens of the first beam light and an incident optical axis to the second objective lens of the second or the third beam light are branched.

According to the above embodiment, since the optical axes of the first to the third beam lights are branched with one rising mirror, and each beam light is entered to the corresponding first or second objective lens, the number of components is small, the designing and the manufacturing of the rising mirror are facilitated, and lower cost is achieved. The aberration correction function and the divergent light conversion function do not need to be added to the first and second films of the rising mirror, and thus the designing and the manufacturing of the first and second films are facilitated, and lower cost is further achieved. The interval between the incident optical axes of the beam lights to the objective lenses from the rising mirror can be narrowed, the interval between the objective lenses can be narrowed, and the optical pickup can be miniaturized. Since the relative angle and the relative position of the first and second films always become constant, each beam light can be entered to each objective lens by simply adjusting the attachment position and the angle of the rising mirror, whereby the relative accuracy of the slope of the incident optical axis become high and the assembly performance enhances. Moreover, since the first film reflects the first beam light having short wavelength corresponding to the BD and transmits the second or the third beam light having long wavelength corresponding to the DVD or the CD, the designing and the manufacturing of the first film are facilitated, and lower cost is achieved. The second film merely reflects the second or the third beam light, and thus the designing and the manufacturing are easy and lower cost is achieved. As the first objective lens is arranged on the center line of the optical pickup and the optical disc, the tracking error signal can be accurately detected with the three beam method and the reproduction performance can be enhanced during reproduction of the BD using the first beam light having short wavelength and the first objective lens.

According to another typical embodiment of the present invention, the second objective lens is arranged so as line parallel to the first objective lens and the optical disc on the light source side of the first objective lens. The rising mirror has a first film for reflecting the second or the third beam light emitted from the light source and making the beam light enter the second objective lens and transmitting the first beam light on one of the parallel surfaces of a transparent substrate, and a second film for reflecting the first beam light emitted from the light source and transmitted through the first film and the transparent substrate and making the beam light enter the first objective lens on the other surface. According to this embodiment, the second objective lens and the first film are arranged on the light source side in comparison with the first objective lens and the second film, and thus the distance from the light source to the objective lens and the rising mirror can be shortened, and further miniaturization of the optical pickup is achieved. Since the second film merely reflects the first beam light, the designing and the manufacturing are easy and lower cost is achieved.

According to the present invention, in the optical pickup of two-lens type, each beam light having different wavelengths is entered to the corresponding first or the second objective lens with one rising mirror, and thus lower cost, miniaturization, and enhancement in assembly performance are simultaneously achieved.

### BRIEF DESCRIPTION OF THE DRAWINGS

Fig. 1 is a view showing an optical pickup according to an embodiment of the present invention;
Fig. 2 is a view showing an optical system of the optical pickup according to the embodiment of the present invention;
Fig. 3 is a view showing an optical pickup according to another embodiment of the present invention;
Fig. 4 is a view showing an optical system of the optical pickup according to another embodiment of the present invention;
Fig. 5 is a view showing a rising mirror according to another embodiment of the present invention;
Fig. 6 is a view showing a rising mirror according to another embodiment of the present invention;
Fig. 7 is a view showing an optical system of the optical pickup in the conventional art; and
Fig. 8 is a view showing an optical system of the optical pickup in the conventional art.

### DETAILED DESCRIPTION OF THE PREFERRED EMBODIMENTS

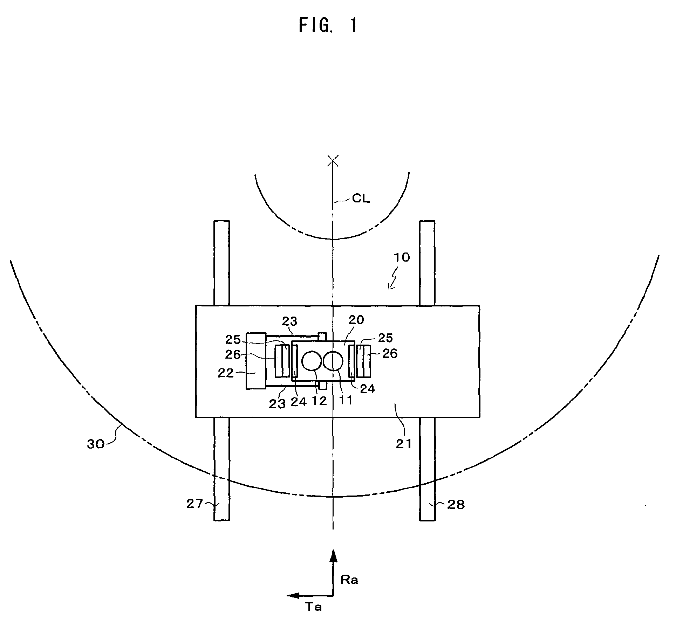

Fig. 1 is a view showing an optical pickup 10 according to an embodiment of the present invention. The optical pickup 10 of two-lens type performs reproduction or recordation of information on each optical disc 30 of BD, DVD, or CD with the corresponding beam light. The optical disc 30 is installed above the optical pickup 10. A feeding board 21 is supported by a lead screw 27 and a guide shaft 28. The lead screw 27 and the guide shaft 28 are parallel in a radial direction Ra of the optical disc 30. A fixing unit 22 is fixed on the feeding board 21. An elastic member 23 made of wire or plate spring is attached to the fixing unit 22 parallel to a tangential direction Ta of the disc 30. In the figure, an arrow is indicated to point out one side of the tangential direction Ta and the radial direction Ra of the optical disc 30 for the sake of convenience. The elastic member 23 supports a movable unit 20 in a cantilever manner.

The BD objective lens 11 designed on the basis of the BD and the BD beam light and the DVD/CD objective lens 12 designed on the basis of the DVD or the CD and the DVD/CD beam light are attached to the movable unit 20. Magnets 24 are attached to the both side faces of the movable unit 20. A focus coil 25 and a tracking coil 26 are attached to the feeding board 21 so as to face a magnet 24. The movable unit 20 and the objective lenses 11, 12 microscopically reciprocate in the focusing direction (thickness direction of the disc 30 and the height direction of the optical pickup 10) by the magnetic force of the magnet 24 and the focus coil 25. The movable unit 20 and the objective lenses 11, 12 microscopically reciprocate in the tracking direction (radial direction Ra of the disc 30) by the magnetic force of the magnet 24 and the tracking coil 26. That is, the movable structure of the objective lenses 11, 12 of the optical pickup 10 is a wire suspension type or a plate spring supporting type. When the feeding board 21 is fed by a feeding mechanism including the lead screw 27, the guide shaft 28, a motor and a gear group (not shown), the optical pickup 10 reciprocates in the radial direction Ra of the optical disc 30.

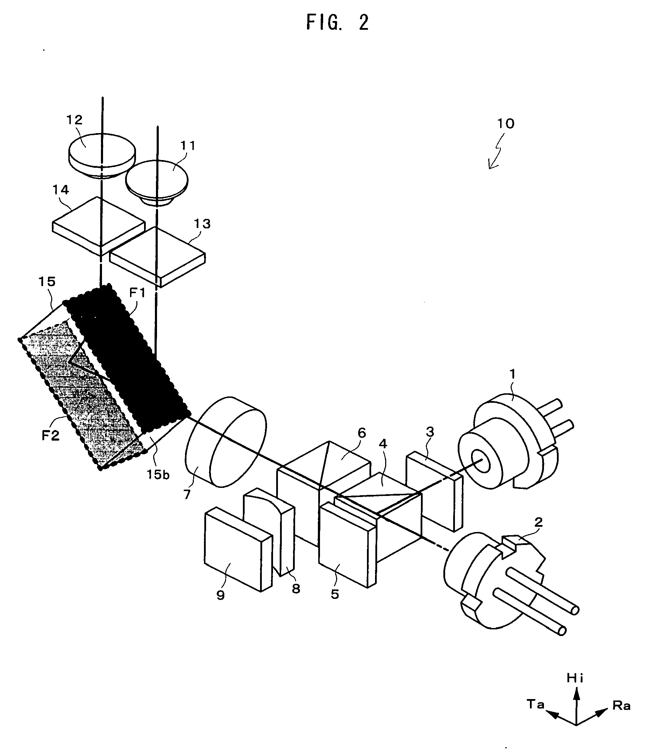

Fig. 2 is a view showing an optical system of the optical pickup 10. The same reference numerals are denoted for the same portions as in Figs. 7 and 8. Redundant description will be omitted in the following description. As shown in Fig. 1, the BD objective lens 11 is arranged on a center line CL of the optical pickup 10 and the optical disc 30. As shown in Figs. 1 and 2, the DVD/CD objective lens 12 is arranged on the side opposite to laser diodes 1, 2 of the BD objective lens 11, and is lined parallel to the BD objective lens 11 and the optical disc 30 and in the tangential direction Ta. The optical axes of the objective lenses 11, 12 are parallel to the height direction Hi. The optical disc 30 is installed above the objective lenses 11, 12. The BD 1/4 wavelength plate 13 is arranged immediately below the BD objective lens 11. The DVD/CD 1/4 wavelength plate 14 is arranged immediately below the DVD/CD objective lens 12. The 1/4 wavelength plates 13, 14 are installed in the movable unit 20.

One rising mirror 15 is arranged in a tilted manner below the objective lenses 11, 12 and the 1/4 wavelength plates 13, 14 (on a side opposite to the optical disc 30). The rising mirror 15 is a dichroic mirror made of glass. A first film F1 is arranged on one surface facing the laser diode 1, 2 side of the parallel surfaces of a transparent substrate 15b of the rising mirror 15, and a second film F2 is arranged on the other surface facing the side opposite to the laser diodes 1, 2. The first film F1 is made of dichroic film etc., and has a wavelength selecting characteristics for selectively reflecting or transmitting the BD/DVD/CD beam light according to wavelength. The second film F2 is made of total reflection film etc., and reflects the BD/DVD/CD beam light.

The BD beam light emitted from the BD laser diode 1 is transmitted through the BD diffraction grating 3, the dichroic prism 4, the polarization beam splitter 6, and the collimator lens 7, and then reflected by the first film F1 of the rising mirror 15 as shown with a chain dashed line to have the light path bent, and then transmitted through the BD 1/4 wavelength plate 13, entered to the BD objective lens 11, and collected on the optical disc 30 of BD. The DVD/CD beam light emitted from the DVD/CD laser diode 2 is transmitted through the dichroic prism 4, the polarization beam splitter 6, and the collimator lens 7, and then transmitted through the first film F1 and the transparent substrate 15b of the rising mirror 15 as shown with a chain double-dashed line, reflected by the second film F2 to have the light path bent, and then transmitted through the DVD/CD 1/4 wavelength plate 14, entered to the DVD/CD objective lens 12, and then collected on the optical disc 30 of DVD or CD. That is, the incident optical axis to the BD objective lens 11 of the BD beam light and the incident optical axis to the DVD/CD objective lens 12 of the DVD/CD beam light are branched by the rising mirror 15.

The reflected light at the optical disc 30 of the BD/DVD/CD beam light is transmitted through the polarization beam splitter 6 and the cylindrical lens 8 via each optical member 11 to 15, and 7 in the order opposite the above, and received by the photodetector 9. The focus error signal, the tracking error signal, the reproduction signal, and other signals related to aberration and light quantity are detected from the reflected light received by the photodetector 9. When collecting the BD beam light on the BD with the BD objective lens 11, the tracking signal is detected with the three beam method. When collecting the DVD/CD beam light on the DVD or the CD with the DVD/CD objective lens 12, the tracking signal is detected with DPD (Differential Phase Detection) method.

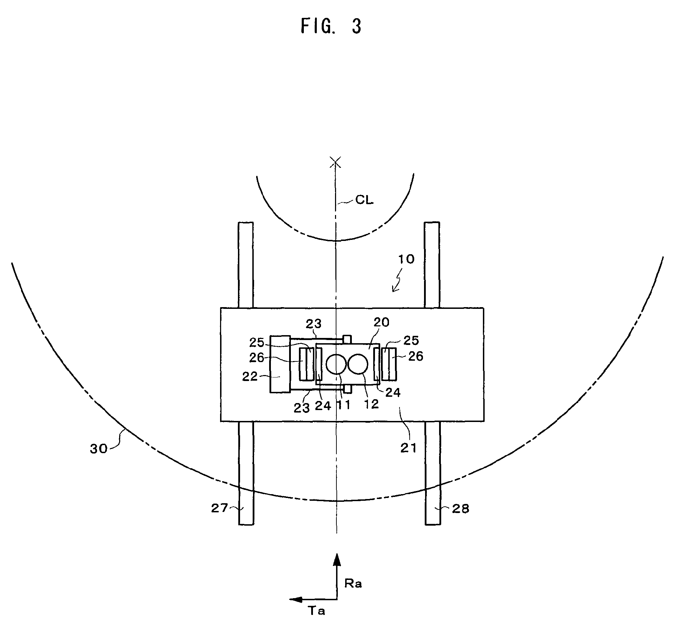

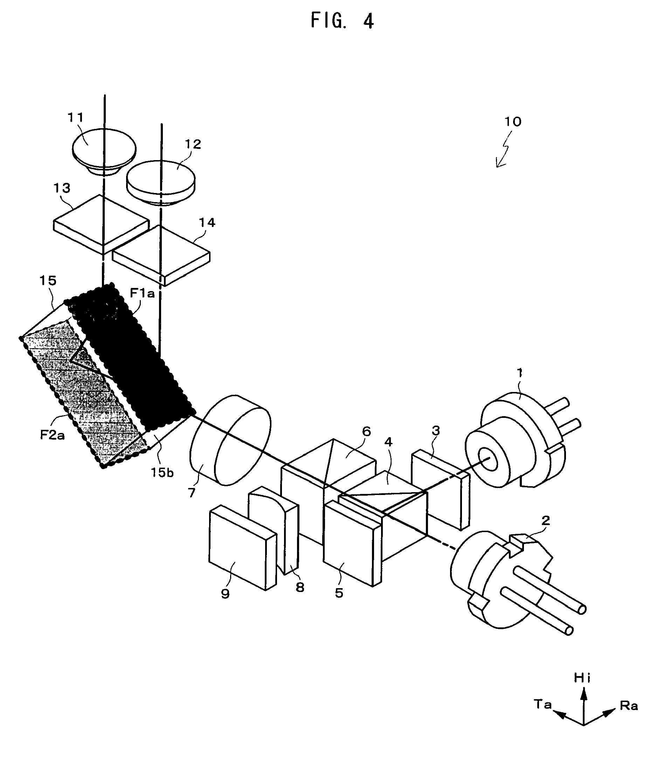

In the above description, the BD beam light having short wavelength is reflected by the first film F1 of the rising mirror 15 and then entered to the BD objective lens 11, and the DVD/CD beam light having long wavelength is reflected by the second film F2 and entered to the DVD/CD objective lens 12, but an opposite mode may also be adopted. Fig. 3 is a view showing the optical pickup 10 according to another embodiment of the present invention. Fig. 4 is a view showing an optical system of the optical pickup 10 according to another embodiment of the present invention. In the figures, the same reference numerals are denoted for the same portions as in Figs. 1, 2, 7, and 8. Redundant description will be omitted in the following description.

As shown in Fig. 3, the BD objective lens 11 is arranged on the center line CL of the optical pickup 10 and the optical disc 30. As shown in Figs. 3 and 4, the DVD/CD objective lens 12 is arranged on the laser diodes 1, 2 side of the BD objective lens 11, and is lined parallel to the BD objective lens 11 and the optical disc 30 and in a tangential direction Ta. As shown in Fig. 4, the rising mirror 15 is arranged below the objective lenses 11, 12 and the 1/4 wavelength plates 13, 14. A first film F1a is arranged on one surface facing the laser diode 1, 2 side of parallel surfaces of the transparent substrate 15b of the rising mirror 15, and a second film F2a is arranged on the other surface facing opposite to the laser diodes 1, 2.
The first film F1a is made of dichroic film etc. and has wavelength selecting characteristics. The second film F2a is made of total reflection film etc. and reflects the BD/DVD/CD beam light.

The DVD/CD beam light emitted from the DVD/CD laser diode 2 is transmitted through the dichroic prism 4, the polarization beam splitter 6, and the collimator lens 7, and then reflected by the first film F1a of the rising mirror 15 as shown with a chain double-dashed line to have the light path bent, and then transmitted through the DVD/CD 1/4 wavelength plate 14, entered to the DVD/CD objective lens 12, and collected on the optical disc 30 of DVD or CD. The BD beam light emitted from the BD laser diode 1 is transmitted through the BD diffraction grating 3, the dichroic prism 4, the polarization beam splitter 6, and the collimator lens 7, and then transmitted through the first film F1a and the transparent substrate 15b of the rising mirror 15 as shown with a chain dashed line, and reflected by the second film F2a to have the light path bent, and then transmitted through the BD 1/4 wavelength plate 13, entered to the BD objective lens 11, and collected on the optical disc 30 of BD.

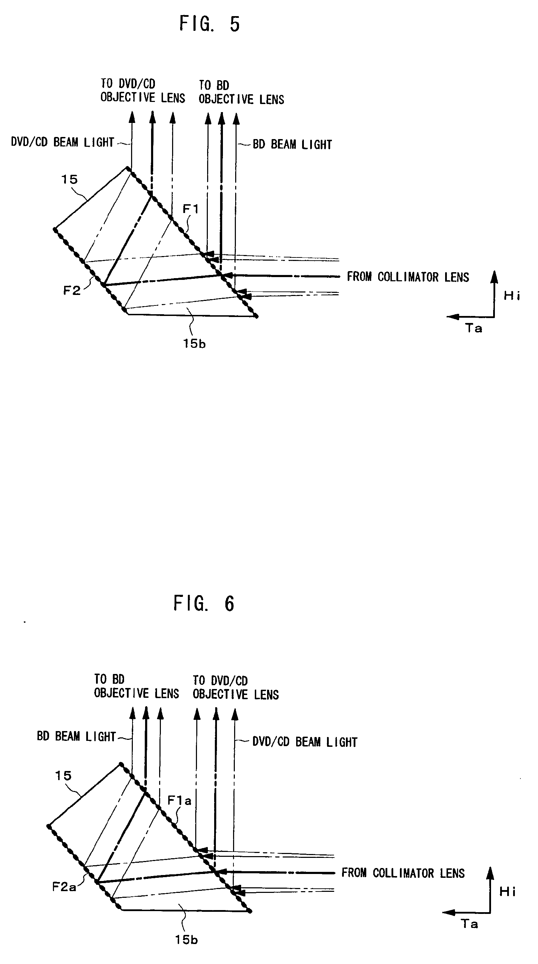

In Figs. 2 and 4, the rising mirror 15 is formed as a rectangular solid, but the rising mirror 15 may be formed to a trapezoid as shown in Figs. 5 and 6. The chain dashed line shows the light path of the BD beam light and the chain double-dashed line shows the light path of the DVD/CD beam light. In Figs. 5 and 6, the portions not necessary for reflection and transmission of the BD/DVD/CD beam light on the side opposite to the objective lenses 11, 12 of the rising mirror 15 are cut.

According to the above embodiment, one rising mirror 15 is used to make the BD/DVD/CD beam lights having different wavelengths enter the corresponding objective lenses 11, 12, and thus the number of components is reduced and lower cost is achieved. Since the rising mirror 15 has lower manufacturing cost than the prism, the cost can be further lowered. The incident optical axis to the BD objective lens 11 of the BD beam light and the incident optical axis to the DVD/CD objective lens 12 of the DVD/CD beam light are not forcibly coincided but branched by the rising mirror 15. Thus, the designing and the manufacturing of the rising mirror 15 and the films F1, F1a, F2, and F2a are facilitated, and lower cost is further achieved. Two objective lenses 11, 12 corresponding to the BD/DVD/CD beam light are used, and the aberration correction function and divergent light conversion function do not need to be provided to the films F1, F1a, F2, and F2a of the rising mirror 15. Thus, the designing and manufacturing of the films F1, F1a, F2, and F2a are facilitated, and lower cost is further achieved.

Moreover, since other mirrors and prisms that interrupt the BD/DVD/CD beam light reflected by the films F1, F1a, F2, and F2a of the rising mirror 15 are not arranged, the interval between the incident optical axes of the BD/DVD/CD beam light to each objective lens 11, 12 from the rising mirror 15 can be narrowed, the interval between the objective lenses 11, 12 and the interval between the 1/4 wavelength plates 13, 14 can be narrowed, and miniaturization of the optical pickup 10 in the tangential direction Ta can be achieved. In particular, the interval between the incident optical axes and the interval between the objective lenses 11, 12 can be further narrowed by increasing an attachment angle (steep tilt) of the rising mirror 15 with respect to the objective lenses 11, 12, so that the optical pickup 10 can be further miniaturized in the tangential direction Ta.

Since the first film F1, F1a and the second film F2, F2a for reflecting the BD/DVD/CD beam light are arranged on both parallel surfaces of the rising mirror 15, the relative angle and the relative position of the first film F1, F1a and the second film F2, F2a are always maintained constant. Thus, the corresponding BD/DVD/CD beam light can be entered to each objective lens 11, 12 by simply adjusting the attachment position and the angle of the rising mirror 15, whereby the relative accuracy of the tilt of the incident optical axis becomes higher and the assembly performance enhances.

Since the BD objective lens 11 is arranged on the center line CL of the optical pickup 10 and the optical disc 30, the tracking error signal can be accurately detected with the three beam method thereby enhancing the reproduction performance when reproducing the BD by using the BD beam light having short wavelength and the BD objective lens 11.

As the BD beam light having short wavelength is reflected and the DVD/CD beam light having long wavelength is transmitted by the first film F1 of the rising mirror 15 as shown in Figs. 2 and 5, the designing and the manufacturing of the first film F1 are facilitated and lower cost is achieved than in the opposite case (first film F1a of rising mirror 15 in Figs. 4 and 6). The second film F2 of the rising mirror 15 merely reflects the DVD/CD beam light having long wavelength, and thus designing and manufacturing thereof are easy, the manufacturing cost is low, and lowering in cost can be achieved.

As the DVD/CD objective lens 12 and the first film F1a are arranged on the laser diode 1, 2 side in comparison with the BD objective lens 11 and the second film F2a as shown in Figs. 3 and 4, the distance from the laser diode 1, 2 to the objective lens 11, 12 and the rising mirror 15 is shortened, and further miniaturization of the optical pickup 10 in the tangential direction Ta is achieved. The second film F2a of the rising mirror 15 merely reflects the BD beam light having short wavelength, and thus designing and manufacturing thereof are easy, the manufacturing cost is low, and lowering in cost can be achieved.

By cutting the portions not necessary for reflection and transmission of the BD/DVD/CD beam light on the side opposite to the objective lenses 11, 12 of the rising mirror 15, as shown in Figs. 5 and 6, the height of the rising mirror 15 can be lowered, and the optical pickup 10 can be miniaturized in the height direction Hi while reflecting the BD/DVD/CD beam light by the rising mirror 15 and making it enter each corresponding objective lens 11, 12.

The present invention can employ various modes other than the embodiment described above. For instance, an example of using one laser diode 1 for emitting the BD beam light and one laser diode 2 for emitting the DVD beam light and the CD beam light as the light source has been described in the above embodiment, but the present invention is not limited thereto. For example, one laser diode which emits all the beam lights for BD, DVD, and CD may be used as the light source. A light source such as one or a plurality of laser diodes for emitting two types or four or more types of beam lights corresponding to the optical disc of two types of four or more types may be used.

Furthermore, an example of applying the present invention to the optical pickup 10 capable of reproducing and recording information on the three types of optical discs 30 of BD, DVD, and CD has been described in the above embodiment, but the present invention is also applicable to an optical pickup capable of reproducing and recording information on at least two or more types of optical discs out of BD, DVD, CD, or other optical discs.

## Claims

1. An optical pickup comprising a light source for emitting beam lights having different wavelengths corresponding to types of optical discs; a first objective lens for collecting the beam light corresponding to one optical disc on the corresponding optical disc, and a second objective lens for collecting the beam light corresponding to another optical disc on the corresponding optical disc, wherein
each objective lens is arranged parallel to the optical disc;
one rising mirror is arranged in a tilted manner on a side opposite to the optical disc of each objective lens; and
the rising mirror has a first film for reflecting one beam light emitted from the light source and making the beam light enter one objective lens and transmitting the other beam light on one of the parallel surfaces of a transparent substrate, and a second film for reflecting the other beam light emitted from the light source and transmitted through the first film and the transparent substrate and making the beam light enter the other objective lens on the other surface, an incident optical axis to the one objective lens of the one beam light and an incident optical axis to the other objective lens of the other beam light being branched.

2. The optical pickup according to claim 1, wherein a portion not necessary for reflection and transmission of the beam light on the side opposite to each objective lens of the rising mirror is cut.

3. The optical pickup according to claim 1 or 2, wherein
the first objective lens is arranged on a center line of the optical pickup and the optical disc to collect the beam light having short wavelength on the optical disc corresponding to the beam light;
the second objective lens is arranged on a side opposite to the light source of the first objective lens to collect the beam light having long wavelength on the optical disc corresponding to the beam light; and
the rising mirror reflects the beam light having short wavelength of the beam lights emitted from the light source with the first film and makes the beam light enter the first objective lens, and transmits the beam light having long wavelength through the first film and the transparent substrate and reflects the beam light with the second film to make it enter the second objective lens.

4. The optical pickup according to claim 1 or 2, wherein
the first objective lens is arranged on a center line of the optical pickup and the optical disc to collect the beam light having short wavelength on the optical disc corresponding to the beam light;
the second objective lens is arranged on the light source side of the first objective lens to collect the beam light having long wavelength on the optical disc corresponding to the beam light; and
the rising mirror reflects the beam light having long wavelength of the beam lights emitted from the light source with the first film and makes the beam light enter the second objective lens, and transmits the beam light having short wavelength through the first film and the transparent substrate and reflects the beam light with the second film to make it enter the first objective lens.

5. An optical pickup comprising a light source for emitting a first beam light corresponding to BD, a second beam light corresponding to DVD, and a third beam light corresponding to CD; a first objective lens for collecting the first beam light on the BD; and a second objective lens for collecting the second or the third beam light on the DVD or the CD; wherein
the first objective lens is arranged on a center line of the optical pickup and an optical disc;
the second objective lens is arranged so as to be parallel to the first objective lens and the optical disc on a side opposite to the light source of the first objective lens;
a rising mirror including one dichroic mirror made of glass is arranged in a tilted manner on a side opposite to the optical disc of each objective lens; and
the rising mirror has a first film for reflecting the first beam light emitted from the light source and making the first beam light enter the first objective lens and transmitting the second or the third beam light on one of the parallel surfaces of a transparent substrate, and a second film for reflecting the second or the third beam light emitted from the light source and transmitted through the first film and the transparent substrate and making the beam light enter the second objective lens on the other surface, an incident optical axis to the first objective lens of the first beam light and an incident optical axis to the second objective lens of the second or the third beam light being branched.

6. An optical pickup comprising a light source for emitting a first beam light corresponding to BD, a second beam light corresponding to DVD, and a third beam light corresponding to CD; a first objective lens for collecting the first beam light on the BD; and a second objective lens for collecting the second or the third beam light on the DVD or the CD; wherein
the first objective lens is arranged on a center line of the optical pickup and an optical disc;
the second objective lens is arranged so as to be parallel to the first objective lens and the optical disc on the light source side of the first objective lens;
a rising mirror including one dichroic mirror made of glass is arranged in a tilted manner on a side opposite to the optical disc of each objective lens; and
the rising mirror has a first film for reflecting the second or the third beam light emitted from the light source and making the beam light enter the second objective lens and transmitting the first beam light on one of the parallel surfaces of a transparent substrate, and a second film for reflecting the first beam light emitted from the light source and transmitted through the first film and the transparent substrate and making the beam light enter the first objective lens on the other surface, an incident optical axis to the second objective lens of the second or the third beam light and an incident optical axis to the first objective lens of the first beam light being branched.
